(19) Europäisches Patentamt / European Patent Office / Office européen des brevets

(11) **EP 4 383 186 A1**

(12) **EUROPEAN PATENT APPLICATION**

(43) Date of publication:
**12.06.2024 Bulletin 2024/24**

(21) Application number: **22212275.6**

(22) Date of filing: **08.12.2022**

(51) International Patent Classification (IPC):
**G06T 5/00** *(2024.01)*       *H04N 1/60* *(2006.01)*
**G06F 5/01** *(2006.01)*       *H04N 5/57* *(2006.01)*
**H04N 9/68** *(2023.01)*

(52) Cooperative Patent Classification (CPC):
**G06T 5/92; G09G 5/10; H04N 5/20;**
G06T 2207/10016; G06T 2207/10024;
G06T 2207/20208; H04N 19/85

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventor: **TICHELAAR, Johannes Yzebrand**
**5656AG Eindhoven (NL)**

(74) Representative: **Philips Intellectual Property &
Standards
High Tech Campus 52
5656 AG Eindhoven (NL)**

(54) **IMAGE BRIGHTNESS ADJUSTMENT FOR PERCEPTUALLY INFORM ELECTRICAL TO OPTICAL TRANSFER FUNCTION**

(57)    An image processing apparatus comprises a receiver (401) receiving an image comprising first pixel brightnesses encoded in accordance with a perceptually uniform Electrical to Optical Transfer Function, EOTF. A converter converts this to second pixel brightnesses encoded in accordance with an EOTF representing a logarithmic mapping from optical light values to the second pixel brightnesses and an image processor circuit (411) applies a brightness adjustment processing to the second pixel brightnesses. The converter (410) comprises a first converter (601, 605) generating intermediate pixel brightnesses applying a logarithm function to the first pixel brightnesses A second converter (603) generates intermediate pixel brightnesses by applying a second logarithm function to an output value of the perceptually uniform EOTF for the first pixel brightness divided by a divisor equal to the first pixel brightnesses raised to a power of an exponent having a value exceeding 1. A combiner generates the second pixel brightnesses by combining the intermediate pixel brightnesses.

**FIG. 6**

EP 4 383 186 A1

**Description**

FIELD OF THE INVENTION

The invention relates to image processing and specifically to brightness adjustment processing such as in particular, but not exclusively, tone mapping for High Dynamic Range (HDR) images.

BACKGROUND OF THE INVENTION

A few years ago, novel techniques of High Dynamic Range (HDR) video coding were introduced, inter alia by the Applicant (see e.g. WO2017157977).

Coding of a video is generally concerned mostly, or only, with making or more precisely defining color codes (e.g. a luma and two chromas per pixel) to represent the images. This is something different than knowing how to optimally display a HDR image (e.g., the simplest methods merely employ a highly non-linear Opto-Electrical transfer function OETF to convert desired luminances into e.g. 10 bit luma codes, and vice versa one can convert those video pixel luma codes into to be displayed luminances, by using an inversely shaped Electro-optical transfer function EOTF, mapping the 10 bit electrical luma codes to the to be displayed optical pixel luminances, but more complex systems can deviate in several directions, in particular by disconnecting the coding of an image, from a particular use of a coded image).

The coding and handling of HDR video contrasts quite majorly with how legacy video technology was used, according to which all videos were encoded until recently, which is nowadays called Standard Dynamic Range (SDR) video coding (a.k.a. low dynamic range video coding; LDR). This SDR started out as PAL or NTSC in the analogue era, moving to Rec. 709-based coding e.g. MPEG2 compressed in the digital video era.

Though being a satisfactory technology for communicating moving pictures in the 20th century, advances in display technology, beyond the physical limits of the electron beam of the 20th century CRT, or the globally TL-backlit LCD, made it possible to show images with significantly brighter (and potentially also darker) pixels than on those legacy displays, which urged a need to be able to code, and create such HDR images.

In fact, starting with the much brighter and possibly also darker image objects being uncodeable with the SDR standard (8 bit Rec. 709), for various reasons, one first invented ways of being able to technically represent those increased luminance range colors, and therefrom one by one all the rules of video technology were revisited, and often had to be re-invented.

SDR's luma code definition, of Rec. 709, was able to encode (with 8, or 10 bit lumas) only about 1000:1 luminance dynamic range because of its approximately square root OETF function shape, luma: $Y\_code = power(2, N)*sqrt(L\_norm)$, in which N is the number of bits of the luma channel, and $L\_norm$ is a normalized between 0 and 1 version of the physical luminances.

Furthermore, in the SDR era there was no absolute to be displayed luminance defined, so one in fact mapped the maximum relative luminance $L\_norm\_max = 100\%$, or 1, to the maximum normalized luma code, Yn=1, corresponding to e.g. $Y\_code\_max = 255$, via the square root OETF. This has several technical differences compared to making absolute HDR images, i.e. in which an image pixel coded to be displayed as 200 nit, is ideally (i.e. when possible) to be displayed as 200 nit, on all displays, and not as a quite different displayed luminance. In the relative paradigm, the 200 nit coded pixel luminance may be displayed at 300 nit on a brighter display, i.e. a display with a brighter maximum displayable luminance **PL_D** (a.k.a. **display maximum luminance**), and e.g. 100 nit on a lesser capability display. Note that also absolute encodings can work on normalized luminance representations, or normalized 3D color gamuts, but then 1.0 means e.g. uniquely 1000 nit.

At the display such a relative image got displayed somewhat heuristically, normally by mapping the brightest luminance of the video to the brightest displayable pixel luminance (which happened automatically without involving further luminance mapping, via the electrical driving the display panel by the max. luma Y_code_max), so if you bought a 200 nit PL_D display your white looked 2x brighter than on a 100 nit PL_D display, but given such factors like eye adaptation that was considered not to matter too much, except for giving a brighter, better watchable and somewhat more beautiful version of the same SDR video images.

Conventionally if one nowadays (in the absolute framework) speaks about a SDR video IMAGE, it typically has a video peak luminance of PL_V=100 nit (e.g. agreed per standard), so in this application we consider the maximum luminance of an SDR image (or SDR grading) to be exactly that, or generalized around that value.

**Grading** in this application is intended to mean either the activity or the resultant image in which pixels have been given a luminance as desired, e.g. by a human color grader, or an automaton. If one looks at an image, e.g. designs an image, there will be several image objects, and one may ideally want to give the pixels of those objects a luminance spread around an average luminance which is optimal for that object, given also the totality of the image, and the scene. E.g., if one has an image capability available so that the brightest codeable pixel of that image is 1000 nit (the **image or video maximum luminance PL_V**), one grader may elect to give the pixels of an explosion luminance values between 800 and 1000 nits, to make the explosion appear quite punchy, whereas another movie maker may elect an explosion no brighter than 500 nit, to e.g. not deter too much from the rest of the image at that moment in time (and of course technology should be able to handle both situations).

The maximum luminance of a HDR image or video may vary considerably, and is typically co-communicated with the image data as a metadatum about the HDR video or image (typical values may be e.g. 1000 nit, or 4000 nit, or 10,000 nit, non-limited; typically one would say to have a HDR image when PL_V is at least 600 nit). If the video creator elects to define his images as PL_V= 4000 nit, he can of course elect to create brighter explosions, although relatively they would not reach to the 100% level of PL_V, but e.g. only up to 50% for such a high PL_V definition of the scene.

HDR displays may have a maximum capability, i.e. a highest displayable pixel luminance of (starting for the lower end HDR displays) e.g. 600 nit, or 1000 nit, or a number N times 1000 nits. That display maximum -or peak-luminance PL_D is something else than the video maximum luminance PL_V, and those two should not be confused. A video creator cannot typically make an optimal video for each possible end-user display (i.e. in which the capability of the end-user display is used optimally by the video, with the maximum luminance of the video never exceeding the maximum luminance of the display (ideally), but also not being lower, i.e. there should at least be some pixels in some of the video images which have a pixel luminance L_p= PL_V, which for continuous optimization to any particular display would also involve PL_V= PL_D).

The creator will make some of his own decisions (e.g. what kind of content is he capturing, and in which manner), and typically make a video with a PL_V so high that he can at least serve the highest PL_D displays of his intended audience today, and possibly also in the future, when higher PL_D displays may have emerged.

A secondary question then emerges, how to best display an image with a peak luminance PL_V on a display with a (oftentimes much) lower display peak luminance PL_D, which is called **display adaptation**. Even in the future, there will still be displays that require a lower dynamic range image than the e.g. 2000 nit PL_V image which was created, and is received via a communication medium. In theory a display can always re-grade i.e. map the luminances of the image pixels so that they become displayable by its own internal heuristics, but if the video creator takes good care in determining the pixel luminances, it may be beneficial that he can also indicate how his image should be display adapted to lower PL_D values, and ideally the display follows these technical desiderata to a large degree.

Regarding the **darkest displayable pixel luminance BL_D**, the situation is more complicated. Some of it may be a fixed physical property of the display, like e.g. LCD cell leak light, but, even with the best displays, what the viewer can ultimately discern as different darkest blacks, also depends on the illumination of the viewing room, which is not a well-defined value. This illumination can be characterized as e.g. an average illuminance level in lux, but for video displaying purposes more elegantly as a minimum pixel luminance. This typically also involves the human eye, in a more strong manner than the appearance of bright or middle luminances, because if the human eye is looking at a lot of pixels of high brightness, the darker pixels, and especially their absolute luminance, may become less relevant. But one can assume the eye not to be the limiting factor, e.g. when watching a largely dark scene image but still masked by surround light on the front of the display screen. If one assumes that a human can see 2% just noticeable difference, there is some **darkest driving level** (or luma) b, above which one can still see the next dark luma level (i.e. X% higher in displayed luminance, e.g. displaying 2% more luminance level).

In the LDR era one didn't care too much about the darkest pixels at all. One cared mostly about the average luminance, approximately ¼ of the maximum PL_V=100 nit. If the image was exposed around this value, everything in the scene looked nicely bright and colorful, except for the clipping of bright parts of the scene above the 100% maximum. For the darkest parts of the scene, in case they were sufficiently important, one created the captured images with a sufficient amount of base lighting in the recording studio or shooting environment. If some of the scene was not seen well, e.g. because it got drowned into the code Y=0, that was considered normal.

Ergo, if nothing is specified further, one may assume that the blackest black is zero, or something like 0.1 or 0.01 nit in practice. In such a situation the technologist cares more about the above-average brighter pixels in the HDR image, as coded, and/or displayed.

Regarding the coding, the difference between HDR and SDR is not only a physical one (more different pixel luminances, to be displayed on larger dynamic range capability displays), but also a technical one involving a different luma code allocation function (for which one uses the OETF; or in absolute methods the inverse of the EOTF), and potentially also further technical HDR concepts like e.g. additional dynamically (per image or set of temporally successive images) changing metadata, which specifies how to re-grade the various image object pixel luminances to obtain an image of a secondary dynamic range different from a starting image dynamic range (the two luminance ranges typically ending at a peak luminance which differs at least 1.5x), etc.

A simple HDR codec was introduced to the market, the HDR10 codec, which is e.g. used to create the recently appearing black jewelbox HDR Blu-rays. This HDR10 video codec uses as OETF (inverse EOTF) a more logarithmically shaped function than the square root, namely the so-called **Perceptual Quantizer (PQ)** function which is standardized in SMPTE 2084. Instead of being limited to 1000:1 like the Rec. 709 OETF, this PQ OETF allows defining lumas for many more (ideally to be displayed) luminances, namely between 1/10,000 nit and 10,000 nit, sufficient for practical HDR video production.

Note that the reader should not simplistically confuse HDR with a large amount of bits in the luma code words. That may be true for linear systems like the amount of bits of an analog-digital convertor, wherein indeed the amount of bits follows as the logarithm with base 2 of the dynamic range. However, since code allocation functions can have a quite non-linear shape, in theory however one desires, one can define HDR images with only 10 bit lumas (and even 8 bit per color component HDR images), which led to the advantage of reusability of already deployed systems (e.g. ICs may have a certain bit-depth, or video cables, etc.).

After the calculation of the lumas, one has a 10 bit plane of pixel lumas Y_code, to which two chrominance components Cb and Cr per pixel are added, as chrominance pixel planes. This image can be classically treated further down the line "as if' it was an SDR image mathematically, e.g. MPEG-HEVC compressed, etc. The compressor doesn't really need to care about the pixel colors or luminances.

But the receiving apparatus e.g. display (or in fact its decoder) typically needs to do the correct color interpretation of the {Y,Cb,Cr} pixel colors, to display a correctly looking image, and not an image which has e.g. bleached colors.

This is usually handled by co-communicating further image definition **metadata** together with the three pixelated color component planes, which defines the image coding, such as an indication which EOTF is used, for which we shall assume without limitation that the PQ EOTF (or OETF) was used, and a value of PL_V, etc.

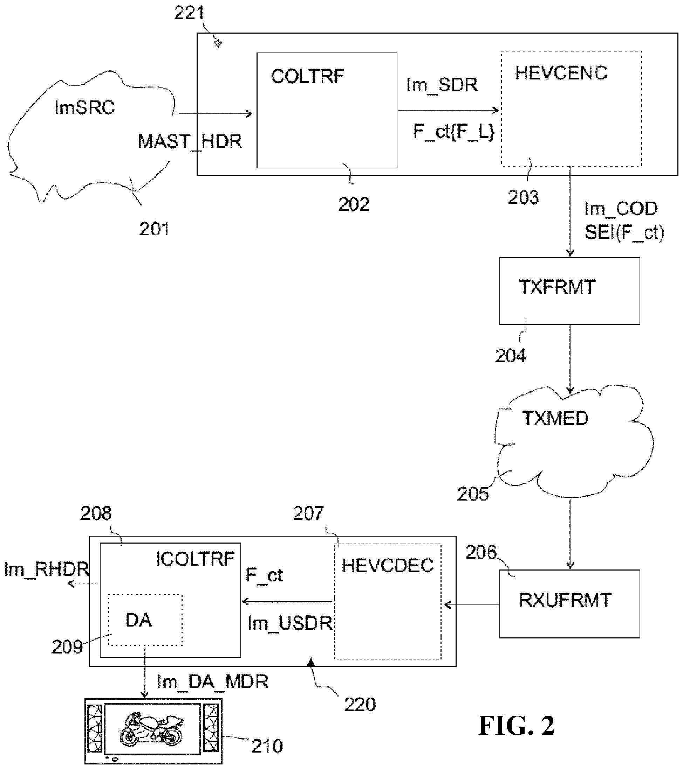

More sophisticated codecs may include further image definition metadata, e.g. handling metadata, e.g. a function specifying how to map normalized version of luminances of a first image up to PL_V= 1000 nit, to normalized luminances of a secondary reference image, e.g. a PL_V = 100 nit SDR reference image (as we elucidate in more detail with Fig. 2).

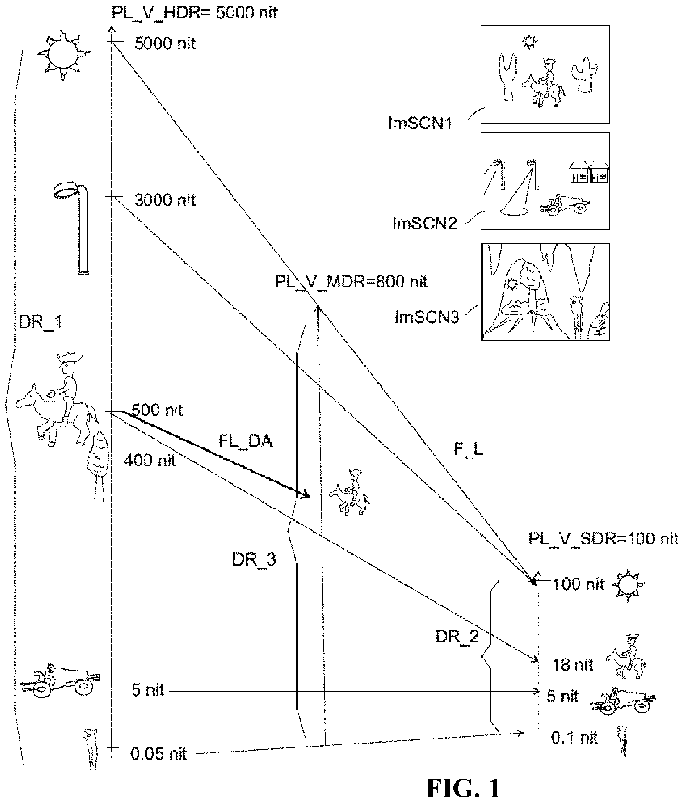

For the convenience of getting readers which are less knowledgeable about HDR up to speed, we quickly elucidate some interesting aspects in **Fig. 1**, which shows a couple of archetypical illustrative examples of the many possible HDR scenes a HDR system of the future (e.g. connected to a 1000 nit PL_D display) may need to be able to correctly handle. Actual technical processing of the pixel colors can happen in various color space definitions in various manners, but the desideratum of a re-grading can be shown as an absolute luminance mapping, between luminance axes spanning different dynamic ranges.

E.g. ImSCN1 is a sunny outdoors image from a western movie, which has mostly bright areas. A first thing one should not misunderstand is that the pixel luminances in any image are typically not the luminances one can actually measure in the real world.

Even if there was no further human involvement in the creation of the output HDR image (which can function as a starter image, which we shall call the master HDR grading or image), no matter how simple by tweaking one parameter, the camera because of its iris at least always measures relative luminances in the image sensor. So there is always some step involved into where at least a brightest image pixel ends up in the available coding luminance range of the master HDR image.

E.g., one may measure a specular reflection of the sun on the sheriffs star badge to be above 100,000 nit in the real world, but that is neither possible to display on the typical near-future display, nor pleasant for a viewer watching the image in a movie, e.g. in a dimly lit room in the evening. Instead, the video creator may decide that 5000 nit is bright enough for the pixels of the badge, so if this is to be the brightest pixel in the movie, the video creator may decide to make a PL_V=5000 nit video. Although, being a <u>relative</u> pixel luminance measuring device only for a RAW version of the master HDR grading, a camera should also have a sufficiently high native dynamic range (full pixel well over noise floor) to make good images. The pixels of the graded 5000 nit image are typically derived in a non-linear manner from the camera captured RAW image, wherein e.g. the color grader will take into account such aspects as typical viewing situation, which will not be the same as when standing in the actual shooting location, i.e. the hot desert. The best (highest PL_V) image one elects to make for this scene ImSCN1, i.e. in this example the 5000 nit image is the master HDR grading. This is the minimally required HDR data to be created and communicated, but not in all codecs the only data communicated, nor in some codecs even the image that gets communicated at all.

Having available such an encodeable high luminance range DR_1, e.g. between 0.001 nit and 5000 nit, would allow the content maker to offer to the viewer a better experience of bright exteriors, but also dimmer night scenes (when well graded throughout the movie), of course, provided that the viewer will also have a corresponding high end PL_D=5000 nit display. A good HDR movie balances the luminance of various image objects not only in one image, but also over time in the story of the movie, or in general created video material (e.g. a well-designed HDR soccer program).

On the leftmost vertical axis of Fig. 1 are shown some (average) object luminances as one would like to see them in the 5000 nit PL_V master HDR grading, intended ideally for a 5000 nit PL_D display. E.g., in a movie, one may want to show a bright sunlit cowboy having pixel luminances around 500 nit (i.e. 10x brighter than in LDR typically, although another creator may desire somewhat less HDR punch, e.g. 300 nit), which would constitute according to the creator the best manner to display this western image, giving the best possible look to the end consumer.

The need for a higher dynamic range of luminances is more easily understood by thinking about an image which in the same image has quite dark regions, such as the shadowy corners of the cave image ImSCN3, but also relatively large areas of very bright pixels, like the sunlit outside world seen through an entrance of the cave. That creates a different visual experience than e.g. the nighttime image of ImSCN2, in which only the street lights contain high luminance pixel regions.

Now a problem is that one needs to be able to define a PL_V_SDR= 100 nit SDR image optimally corresponding to the master HDR image, because at the moment still many consumers have an LDR display, and even in the future there will be good reasons to make two gradings of a movie, instead of the archetypical sole HDR image per se coding. This is a technical desideratum which stands separate from the technical elections regarding the coding per se, which is e.g. evidenced that if one knows how to (invertibly) create one of the master HDR image and this secondary image from the other one, one can elect to code and communicate either one of the pair (effectively communicating two images for the price of one, i.e. communicating only one image a pixel color component planes per video time instant).

In such a reduced dynamic range image, one can of course not define 5000 nit pixel luminance objects like a really bright sun. The minimum pixel luminance or deepest black may also be as high as 0.1 nit, rather than a more preferable 0.001 nit.

So somehow one should be able to make this corresponding SDR image with a reduced luminance dynamic range DR_2.

This could be done by some automatic algorithm in the receiving-side display, e.g. one could use a fixed luminance mapping function, or maybe one conditioned by the simple metadata like the PL_V_HDR value, and potentially one or more other luminance values.

However, in general more complex luminance mapping algorithms can be used, but for this application we assume without loss of generality that the mapping is defined by some global **luminance mapping function F_L** (e.g. one function per image), which defines for at least one image how all possibly occuring luminances in the first image (i.e. e.g. 0.0001- 5000) are to be mapped to corresponding luminances of the second, output image (e.g. 0.1 to 100 nit for an SDR output image). The normalized function can be obtained by dividing the luminances along both axis by their respective maximum. Global in this context means that the same function is used for all pixels of the image irrespective of further conditions like e.g. their position in the image (more generic algorithms using e.g. several functions for pixels classifiable according to some criterium).

Ideally, how all luminances should re-distribute along the available range of the secondary image, the SDR image, should be determined by the video creator, since he knows best how to sub-optimize for a reduced dynamic range so that, given limitations, the SDR image still looks at least as good as feasible like the intended master HDR image. The reader can understand that actually defining (positioning) such object luminances corresponds to defining a shape of the luminance mapping function F_L, the details of which are beyond this present application.

Ideally the shape of the function should also change per different scene, i.e. the cave scene versus the sunny western scene a little later in the movie, or in general per temporal image. This is called **dynamic metadata** (F_L(t), with t indicating image time instant).

Now ideally the content creator would make an optimal image for each situation, i.e. each potentially served end-user display, e.g. a display with PL_D_MDR = 800 nit requiring a corresponding PL_V_MDR= 800 nit image, but that is typically much too much effort for the content creator, even in the most expensive offline video creations.

It has however been demonstrated previously by applicant that it suffices to make (only) two different dynamic range reference gradings of the scene (typically on extreme ends, e.g. 5000 nit being the highest necessary PL_V, and 100 nit typically sufficing as the lowest needed PL_V), since one can then derive all the other gradings from those **two reference gradings** (HDR and SDR) automatically, via some (typically fixed, e.g. standardized) **display adaptation algorithm**, e.g. applied in the end-user display which receives information of the two gradings. In general the calculations can be done in any video receiver, e.g. a settopbox, TV, computer, cinema equipment or the like. The communication channel for the HDR images can also be any communication technology, e.g. terrestrial or cable broadcasting, physical media like a blu-ray disk, the internet, communication channels to portable devices, professional inter-site video communication, etc.

This display adaptation may typically also apply a luminance mapping function, e.g. to the pixel luminances of the master HDR image. But the display adaptation algorithm needs to determine a different luminance mapping function than the F_L_5000to100 (which is the **reference luminanance mapping function** connecting the luminances of the two reference gradings), namely **display adapted luminance mapping function FL_DA**, which is not necessarily trivially related to the original mapping function between the two reference gradings, F_L (there can be several variants of display adaptation algorithms). A luminance mapping function between master luminances defined on a 5000 nit PL_V dynamic range, and a 800 nit medium dynamic range will in this text be written as F_L_5000to800.

We have shown the display adaptation symbolically (for one of the average object pixel luminances only) by an arrow which doesn't map to where one would "naively" expect the F_L_5000to100 function to cross the 800 nit MDR image luminance range, but e.g. somewhat higher (i.e. in such an image the cowboy must be slightly brighter, at least according to the elected display adaptation algorithm). So some more complex display adaptation algorithms may place the cowboy at the indicated higher position, but some customers may be satisfied with the simpler position where the connection between the 500 nit HDR cowboy and the 18 nit SDR cowboy crosses the 800 nit PL_V luminance range.

Typically the display adaptation algorithm calculates the shape of the display adapted luminance mapping function FL_DA based on the shape of the original luminance mapping function F_L (or reference luminance mapping function a.k.a. reference re-grading function).

This Fig. 1-based elucidating constituting the technical desiderata of any HDR video coding and/or handling system, in **Fig. 2** we illustrate some exemplary technical systems and their components to realize the desiderata (non-limiting), as according to a codec approach of the present applicant. It should be understood by the skilled reader that these components can be embodied in various devices etc. The skilled person should understand that this example merely is presented as a pars pro toto for various HDR codec frameworks, to have a background understanding of some principles of operation, and it is not intended to particularly limit any of the embodiments of the innovative contribution presented below.

Although possible, technical communication of two actual different images per time instant (the HDR and SDR grading being each communicated as their respective three color planes) is expensive inter alia regarding the amount of data needed.

It is also not necessary, since if one knows that all corresponding secondary image pixel luminances can be calculated based on the luminance in the primary image and the function F_L, one can decide to communicate only the primary image and the function F_L per time instant as metadata (and one can elect to communicate either the master HDR or the SDR image as representative for the both). As the receiver knows its -typically fixed- display adaptation algorithm, it can based on this data determine the FL DA function at its end (there may be further metadata communicated controlling or guiding the display adaptation, but that is not currently deployed).

There can be two modes of communicating a sole image per time instant and the function F_L.

In the first, backwards-compatible mode, one communicates the SDR image ("**SDR communication mode**"). That SDR image can be directly (without needing further luminance mapping) displayed on legacy SDR displays, but HDR displays need to apply the F_L or FL DA function to obtain a HDR image from the SDR image (or its inverse, depending on which variant of the function is communicated, the up-grading or the down-grading variant). The interested reader can find all details of an exemplary first mode approach of the present applicant standardized in: ETSI TS 103 433-1 V1.2.1 (2017-08): High-Performance Single Layer High Dynamic Range System for use in Consumer Electronics devices; Part 1: Directly Standard Dynamic Range (SDR) Compatible HDR System (**SL-HDR1**).

Another mode communicates the master HDR image itself ("**HDR communication mode**"), i.e. e.g. the 5000 nit image, and the function F_L which allows calculating the 100 nit SDR image from it (or any other lower dynamic range image, via the display adaptation). The master HDR communicated image itself can be encoded e.g. by using the PQ EOTF.

Fig. 2 also shows a total video communication system. At the transmission side, it begins with a source of images 201. Depending on whether one has offline created video, e.g. from an internet-delivery company, or real-life broadcast, this may be anything ranging from a hard disk to a cable output from e.g. a television studio, etc.

This yields the master HDR video (MAST HDR) e.g. color graded by the human color grader, or a shaded version of a camera capturing, or by means of an automatic luminance re-distribution algorithm, etc.

In addition to grading a master HDR image, a set of often reversible color transformation functions F_ct is defined. Without intending to lose generalization, we assume this to comprise at least one luminance mapping function F_L (however, there may be further functions and data, e.g. specifying how the saturation of pixels should change from the HDR to the SDR grading).

This luminance mapping function defines as said above the mapping between the HDR and SDR reference grading (the latter in Fig. 2 being the SDR image Im_SDR to be communicated to receivers; data-compressed via e.g. an MPEG or other video compression algorithm or not).

One should not confuse any color mappings of color transformer 220 with anything that was applied to the raw camera feed to obtain the master HDR video, which is here already assumed to be input, since this color transformation is for obtaining the image to be communicated, and simultaneously the re-grading desiderata, as technically formulated in the luminance mapping function F_L.

For an exemplary SDR-communicating type (i.e. SDR communication mode), the master HDR image is input to color transformer 202 which is configured to apply the F_L luminance mapping to the luminances of the master HDR image (MAST HDR), to obtain all corresponding luminances written into output image Im_SDR. Let's assume for elucidation the shape of this function is tweaked per shot of images of a similar scene of a movie by a human color grader, by using color grading software. The applied functions F_ct (i.e. at least F_L) are written in (dynamic, handling) metadata to be co-communicated with the images, in the example MPEG Supplemental Enhancement Information data SEI(F_ct), or a similar metadata mechanism in other standardized or unstandardized communication methods.

Having correctly re-defined the to be communicated HDR images as corresponding SDR images, Im_SDR, those images are often (at least for e.g. broadcasting to end users) compressed using existing video compression techniques (e.g. MPEG HEVC or VVC, or AV1, and the like). This is performed in video compressor 203, which forms part of video encoder 221 (which in turn may be comprised in various forms of video creation apparatuses or systems).

The compressed image Im_COD is transmitted to at least one receiver over some image communication medium 205 (e.g. a satellite or cable or internet transmission, e.g. according to ATSC 3.0, or DVB, etc.; but the HDR video signal may also be communicated e.g. over a cable between two video handling apparatuses).

Typically before communication some further transformation may be done by transmission formatter 204, which may apply depending on the system such techniques as e.g. packetization, modulation, transmission protocol control, etc. This will typically apply integrated circuits.

At any receiving site, a corresponding video signal unformatter 206 applies the necessary unformatting methods to re-obtain the compressed video as a set of e.g. compressed HEVC images (i.e. HEVC image data), e.g. demodulation etc.

Video decompressor 207 does the e.g. HEVC decompression, to obtain a stream of pixelated uncompressed images Im USDR, which in the present example are SDR images, but in the other mode would be HDR images. The video decompressor will also unpack the necessary luminance mapping function F_L from the e.g. SEI messages, or in general color transformation functions F_ct. The images and functions are input to a (decoder) color transformer 208 which is arranged to transform the SDR image to an image of any non-SDR dynamic range (i.e. of PL_V higher than 100 nit, and typically at least a few times higher, e.g. 5x).

E.g. a 5000 nit reconstructed HDR image Im_RHDR may be reconstructed as close approximation of the master HDR image (MAST HDR) by applying the inverse color transformations IF ct of the color transformations F_ct used at the encoding side to make the Im_LDR from the MAST HDR. This image can then be sent e.g. to a display 210 for further display adaptation, but the making of a display adapted image Im_DA_MDR can also happen in one go, during the decoding, by using in the color transformer the FL_DA function (determined in an offline loop, e.g. in firmware) instead of the F_L function. So the color transformer may also comprise a display adaptation unit 209, to derive the FL DA function.

The optimized e.g. 800 nit display adapted image Im DA MDR may be sent e.g. to a display 210 if the video decoder 220 is comprised e.g. in a settopbox or computer etc., or it may be sent to a display panel in case the decoder resides in e.g. a mobile phone, or it may be communicated to a movie theatre projector if the decoder resides in e.g. some internet-connected server, etc.

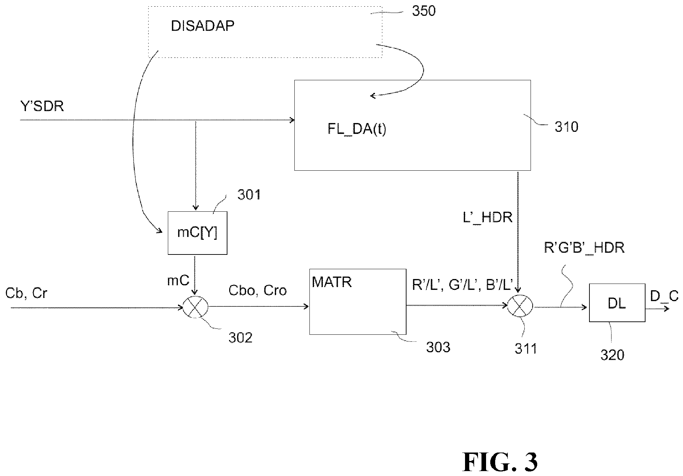

**Fig. 3** shows a useful variant of internal processing of a color transformer 300 of a HDR decoder (or encoder, which may largely have the same topology typically, but using inverse functions, but typically not comprising the display adaptation), i.e. corresponding to Fig. 2, 208.

The luminance of a pixel, in this example an SDR image pixel, is inputted as a corresponding luma Y'SDR. The chrominance a.k.a. chroma components Cb and Cr are inputted into the lower processing path of color transformer 300.

The lumas Y'SDR are mapped to needed output luminances L'_HDR -e.g. master HDR reconstruction luminances, or some other HDR image luminances - by luminance mapping circuit 310. It applies the suitable function, e.g. the display adapted luminance mapping function FL_DA(t) for a particular image and maximum display luminance PL_D, as obtained from the display adaptation function calculator 350 which uses as input the metadata-co-communicated reference luminance mapping function F_L(t). The display adaptation function calculator 350 may also determine a suitable function for processing the chrominances. For the moment we will just assume that a set of multiplication factors mC[Y] for each possible input image pixel luma Y is stored in e.g. a color LUT 301. The exact nature of chromatic processing may vary. E.g., one may want to keep pixel saturation constant, by first normalizing the chrominances by the input lumas (corresponding hyperbolic curve in the color LUT), and then correcting for the output lumas, but any differential saturation processing may be used also. The hue will typically be maintained because both chrominances are multiplied by the same multiplier.

When indexing the color LUT 301 with the luma value of the currently being color transformed (luminance mapped) pixel, Y, the needed multiplicative factor mC results as LUT output. This multiplicative factor mC is used by multiplier 302, to multiply it by the two chrominance values of the present pixel, i.e. to yield color transformed output chominances

$$Cbo = mC * Cb,$$

$$Cro = mC * Cr$$

Via a fixed color matrixing processor 303, applying standard colorimetry calculations, the chrominances can be converted into brightness-lacking normalized non-linear R'G'B' coordinates R'/L', G'/L' and B'/L'.

The R'G'B' coordinates giving the appropriate luminance for the output image are obtained by multiplier 311, which calculates:

$$R'\_HDR = (R'/L')*L'\_HDR,$$

$$G'\_HDR = (G'/L')*L'\_HDR,$$

$$B'\_HDR = (B'/L')*L'\_HDR,$$

which can be summarized in the color triplet R'G'B'_HDR.

Lastly, there may be a further mapping to a format needed for a display, by display mapping circuit 320. This yields display driving colors D_C, which not only may be formulated in a colorimetry desired by a display (e.g. even HLG OEFT format), but also this display mapping circuit 320 may in some variants be arranged to do some particular color processing for the display, i.e. it may e.g. further re-map some of the pixel luminances.

Some examples elucidating some suitable display adaptation algorithms to derive a corresponding FL DA function for any possible F_L function that the creation side grader may have determined, are taught in WO2016/091406 or ETSI TS 103 433-2 V1.1.1 (2018-01).

As previously mentioned, the luma codes representing the HDR video/ image data is often represented in a perceptually uniform representation. In such perceptually uniform representations, the mapping between luminances and luma codes (or vice versa) is such that the perceptual impact of the luminance change corresponding to a change of one Least Significant Bit of the luma code is the same regardless of the absolute value of the luminance/ luma code.

The captured luminances may be mapped to the luma codes using a suitable OETF (inverse EOTF) that results in such a perceptually uniform representation. Similarly, the luma codes of such a perceptually uniform representation can be mapped to luminances for the display output using a suitable OETF. Indeed, a number of different transfer functions have been standardized, such as the EOTF_ST2084 which has been standardized by the Society of Motion Picture and Television Engineers, SMPTE.

However, the perceptually uniform domain may provide an advantageous quantization where the perceptual impact of quantization can be maintained constant. However, perceptually uniform representations are not ideal for all operations. In particular, performing brightness adjustment processing, such as tone mapping or grading, tends to be suboptimal when using perceptually uniform representations. In particular, such operations tend to be complex, resource demanding, and/or not provide optimum results. Further, converting to other representations tend to be disadvantageous and may often increase complexity and introduce error and distortions to the mappings between luma codes and luminances. This is particularly the case for perceptually uniform representations that tend to have extreme behavior towards zero luminance as the required conversion tends to not correspond to a well behaved function, and indeed often tends to approach (positive) infinite first derivative values for the luminance approaching zero.

Hence, an improved approach would be advantageous. In particular an approach allowing increased flexibility, an improved performance, increased image/ video quality, reduced error or inaccuracies, facilitated processing, reduced complexity and/or resource usage, facilitated implementation and/or an improved spatial audio experience would be advantageous.

SUMMARY OF THE INVENTION

Accordingly, the Invention seeks to preferably mitigate, alleviate or eliminate one or more of the above mentioned disadvantages singly or in any combination.

According to an aspect of the invention there is provided an apparatus according to claim 1.

The approach may provide an improved performance and operation in many scenarios and embodiments. It may in particular allow a more accurate and/or facilitated brightness adjustment processing. The approach may allow the brightness adjustment processing to be performed in a logarithmic domain thereby allowing brightness scaling and multiplications to be performed using additions and subtractions. Such operations are widely used in most brightness adjustment processing thereby allowing a substantially reduced complexity and resource usage in many applications.

The specific approach of converting from a perceptually uniform domain for pixel brightness representation to a logarithmic domain may allow an accurate conversion and/or faciliate implementation. In particular, parts of the required conversion/transform function that tend to be ill behaved (and have a limit of $-\infty$ for brightness levels approaching complete darkness) may be addressed by dividing the conversion into different parts that are performed separately and subsequently combined. The approach allows the ill behaved part to predominantly be handled by a standard logarithm function for which practical implementations that can handle very small input values have been developed.

The pixel brightnesses may be represented by luma codes/ values. A pixel brightness being encoded in accordance with an EOTF reflects that a mapping exists between values of the pixel brightnesses (/ luma codes) and light values, and specifically optical light values in a linear domain (e.g. measured in nits). An EOTF may represent this mapping in a direction from luma values/ codes to optical light values. The inverse EOTF ($EOTF^{-1}$), which also corresponds to an OETF, represents the same mapping in a direction from optical light values to luma values/ codes. An EOTF and the matching OETF ($=EOTF^{-1}$) thus both represent the same mapping between optical light values and luma values/ codes. Pixel brightnesses encoded in accordance with a perceptually uniform EOTF are inherently also encoded in accordance with a perceptually uniform OETF ($= EOTF^{-1}$), and vice versa. Pixel brightnesses encoded in accordance with an EOTF representing a logarithmic mapping from optical light values to the second pixel brightnesses are inherently also encoded in accordance with a OETF ($= EOTF^{-1}$) representing a logarithmic mapping from optical light values to the second pixel brightnesses.

The first and second logarithmic functions may have the same base. The combination of the first and second intermediate pixel brightnesses may be a (possibly weighted) summation. The pixel brightnesses may be luma values. The pixel brightnesses may be normalised values relative to a reference brightness, such as e.g. being in a range from 0 to 1, where 1 may correspond to e.g. 10.000 nit.

The brightness adjustment processing may be a tone mapping having the second pixel brightnesses as inputs. The approach may allow an improved and/or reduced complexity tone mapping.

According to an optional feature of the invention, there is provided claim 2.

This may allow improved operation and/or performance in many scenarios and embodiments, and may in particular allow a more accurate conversion of pixel brightnesses to a logarithmic domain. The scale factor may be a design parameter that may be optimized for the specific application.

According to an optional feature of the invention, there is provided claim 3.

This may allow improved operation and/or performance in many scenarios and embodiments. In many embodiments, the scale factor may for example be set such that a first pixel brightness maps to the same value as a second pixel brightness for a reference brightness. For example, a first pixel brightness Ein=1 may map to the same value Eout=1 for the corresponding second pixel brightness for a reference brightness of e.g. 10.000 nits.

According to an optional feature of the invention, there is provided claim 4.

This may allow improved operation and/or performance in many scenarios and embodiments, and may in particular allow a more accurate conversion of pixel brightnesses to a logarithmic domain.

The parameters y and x may be chosen to provide the specific performance and operation required for the specific implementation/ embodiment.

According to an optional feature of the invention, there is provided claim 5.

This may allow improved operation and/or performance in many scenarios and embodiments, and may in particular allow a more accurate conversion of pixel brightnesses to a logarithmic domain.

The parameters y and x may be chosen to provide the specific performance and operation required for the specific implementation/ embodiment.

According to an optional feature of the invention, there is provided claim 6.

This may allow improved operation and/or performance in many scenarios and embodiments, such as specifically when the first pixel brightnesses are encoded in accordance with an SMPTE ST 2084 EOTF.

According to an optional feature of the invention, there is provided claim 7.

This may allow improved operation and/or performance in many scenarios and embodiments, such as specifically when the first pixel brightnesses are encoded in accordance with an SMPTE ST 2084 EOTF.

According to an optional feature of the invention, there is provided claim 8.

This may allow improved operation and/or performance in many scenarios and embodiments.

According to an optional feature of the invention, there is provided claim 9.

The approach may be particularly suitable for converting pixel brightnesses encoded in accordance with an SMPTE ST 2084 EOTF.

According to an optional feature of the invention, there is provided claim 10.

The approach may be particularly suitable for converting pixel brightnesses encoded in accordance with an SMPTE ST 2094-20 EOTF.

According to an optional feature of the invention, there is provided claim 11.

This may allow facilitated and/or improved conversion in many embodiments.

According to an aspect of the invention, there is provided a method in accordance with claim 12.

According to an optional feature of the invention, there is provided claim 13.

According to an optional feature of the invention, there is provided claim 14.

These and other aspects, features and advantages of the invention will be apparent from and elucidated with reference to the embodiment(s) described hereinafter.

BRIEF DESCRIPTION OF THE DRAWINGS

These and other aspects of the method and apparatus according to the invention will be apparent from and elucidated with reference to the implementations and embodiments described hereinafter, and with reference to the accompanying drawings, which serve merely as non-limiting specific illustrations exemplifying the more general concepts, and in which dashes are used to indicate that a component is optional, non-dashed components not necessarily being essential. Dashes can also be used for indicating that elements, which are explained to be essential, but hidden in the interior of an object, or for intangible things such as e.g. selections of objects/regions.

In the drawings:

Fig. 1 schematically illustrates a number of typical color transformations which occur when one optimally maps a high dynamic range image to a corresponding optimally color graded and similarly looking (as similar as desired and feasible given the differences in the first and second dynamic ranges DR_1 resp. DR_2) lower dynamic range image, e.g. a standard dynamic range image of 100 nit maximum luminance, which in case of invertibility would also correspond to a mapping of an SDR image as received which actually encodes the HDR scene, to a reconstructed HDR image of that scene. The luminances are shown as locations on vertical axis from the darkest black to the maximum luminance PL_V. A luminance mapping function is symbolically shown by arrows which map average object luminances from their luminances on the first dynamic range to the second dynamic range (the skilled person knows how to equivalently draw this as a classical function, e.g. on normalized-to-1 axis, which are normalized by dividing by the respective maximum luminances);

Fig. 2 schematically illustrates an high-level-view example of a technology to encode high dynamic range images, i.e. images capable of having luminances of at least 600 nit typically or more (typically 1000 nit or more), which applicant recently developed, which can actually communicate the HDR image either per se or as a corresponding luminance-regraded SDR image plus metadata encoding color transformation functions comprising at least an appropriate determined luminance mapping function (F_L) for the pixel colors, to be used by the decoder to convert the received SDR image(s) into HDR images(s);

Fig. 3 shows details of the interior of an image decoder, and in particular a pixel color processing engine;

Fig. 4 illustrates some elements of an example of an image processing apparatus in accordance with some embodiments of the invention;

FIG. 5 illustrates an example of a conversion from a perceptually uniform luma domain to a logarithmic luma domain;

FIG. 6 illustrates an example of elements of a converter for the image processing apparatus of FIG. 4;

FIG. 7 illustrates an example of a conversion function that may be used in the converter of FIG. 6;

FIG. 8 illustrates an example of a conversion function that may be used in the converter of FIG. 6;

FIG. 9 illustrates some elements of a possible arrangement of a processor for implementing elements of an image processing apparatus in accordance with some embodiments of the invention; and

FIG. 10 illustrates some elements of another example of an image processing apparatus in accordance with another elucidation embodiment of the EETF split embodiments.

DETAILED DESCRIPTION OF THE EMBODIMENTS

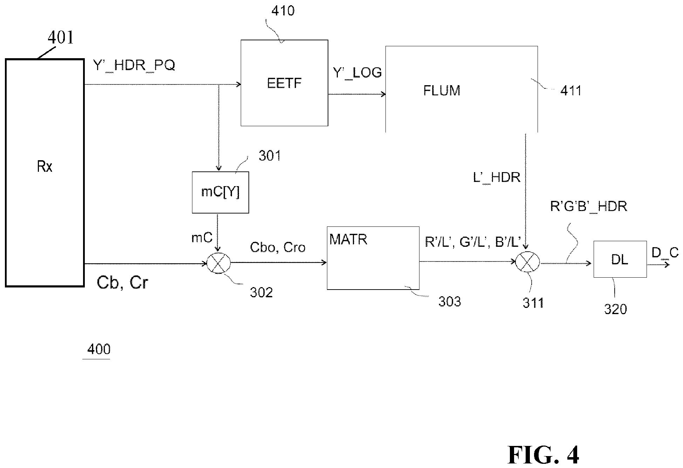

FIG. 4 illustrates an image processing apparatus that may be used to adapt brightnesses of pixels of an image, such as for example for a color transformer of an HDR decoder or encoder. The apparatus may correspond to the approach of FIG. 3 and the comments and description provided for FIG. 3 may be applied to the corresponding features of FIG. 4. The apparatus may be arranged to provide brightness adjustments for a received image.

The signal processing apparatus of FIG. 4 comprises a receiver 401 which is arranged to receive an image that may be an isolated image or which may e.g. be an image/ frame of a video sequence.

The image is formed by pixels represented by values that are indicative of the brightness of the corresponding pixel. For color images, a suitable color coding/ representation may be used, and the following description will focus on a color representation comprising one brightness/ luma value and two chroma values. Specifically, the description will be with reference to the received image being encoded in accordance with a Y'CbCr color space/ representation where Y' is the luma component and CB and CR are the blue-difference and red-difference chroma components. However, it will be appreciated that in other embodiments other color representations may for example be used, such as other color representations which may have one luma component and multiple chroma components or color representations using separate color channels, such as RGB encoded data. Where appropriate, such color representations may for example be converted into e.g. a Y'CbCr color space/ representation by the receiver 401.

In the approach of FIG. 4, the image processing circuit 411 is arranged to perform a luminance processing. In the approach shown, the upper path is thus arranged to perform luminance processing whereas the lower path may perform chroma (CbCr) processing.

The input data to the upper path Y'_HDR_PQ are specifically HDR pixel lumas (for example of an HDR graded image, e.g. having bright explosion pixels up to 4000 nit), e.g. represented as PQ (Perceptual Quantization) lumas.

The image processor circuit 411 may perform any luminance processing function but with the this being performed in the logarithmic domain thus allowing linear light domain scaling/ multiplication to be implemented by addition (e.g. a brightened output luminance may (linearly, usually) be achieved by a luminance multiplication by e.g. 3x, and thus can now be logarithmically be implemented as an addition, etc.) Thus, the converter 410 generates luma values Y' LOG that represent luminances as log(luminance) [e.g. log_10, or log_2] values.

In many embodiments, the brightness of a pixel is thus given by a luma code/value for the pixel.

The pixel brightnesses for the image are encoded in accordance with a perceptually uniform EOTF/ OETF. Thus, the mapping between the luma values and the optical brightness (the real linear optical brightness, e.g. measured in nits) is a perceptually uniform mapping. Accordingly, a difference/ change by a step of one LSB in the luma code/ value is perceived to result in the same brightness change regardless of the absolute value (i.e. the steps represented by the luma codes are considered perceptually the same throughout the range). It will be appreciated that different models or measures of the perceptual impact of brightness changes are known and could be the basis for the perceptually uniform representation.

A perceptually uniform EOTF typically starts out as a gamma a.k.a. power function for the darkest luminances to be coded, gradually changing into a logarithmic mapping for the brightest luminances. Thus, typically a perceptually uniform EOTF approaches a gamma/ power function for luminances approaching zero brightness, and approaches a logarithmic function function for luminances approaching maximum brightness.

It will be appreciated that an EOTF represents a mapping from luma codes to optical brightnesses and an OETF represents a mapping from optical brightnesses to luma codes. Thus, both and EOTF and an OETF represents a mapping between optical brightnesses and luma codes. Indeed, the two may be considered inverse mappings of each other in the sense that a given OETF will also have a corresponding EOTF given as the inverse OETF, i.e. the OETF will have the corresponding EOTF=OETF$^{-1}$. Similarly, a given EOTF will also have a corresponding OETF given as the inverse EOTF, i.e. the EOTF it will have the corresponding OETF=EOTF$^{-1}$. Thus, luma codes encoded in accordance with an EOTF is inherently also encoded in accordance with a corresponding OETF. Indeed, both represents a mapping between luma codes and optical brightness (but in opposite directions). In a practical implementation, an OETF is used to convert optical brightness values to luma codes (i.e. at the capture/ input side) and an EOTF is used to convert luma codes to optical brightness values (i.e. at the rendering of side). In a practical system, the used EOTF may indeed be the inverse of the OETF applied to convert the captured pixel values but in some practical systems the OETF may different, i.e. the inverse of the used EOTF is not necessarily the same as the used OETF (and similarly the used OETF is not necessarily the same as the used EOTF).

In the system of FIG. 4, the pixel brightnesses of the received image are represented by luma codes that are encoded in accordance with a perceptually uniform EOTF, and thus equivalently is encoded in accordance with a perceptually uniform OETF given as the inverse function of the perceptually uniform EOTF. The luma codes thus represent values with a quantization that is designed to have the same relative perceptual impact throughout the range.

The luma codes may specifically be represented by values mapping to optical brightnesses in accordance with the mapping defined by Society of Motion Picture and Television Engineers, SMPTE, as the ST 2084 EOTF. In some embodiments, the luma codes may specifically be represented by values mapping to optical brightnesses in accordance with the mapping defined by SMPTE, as the ST 2094-20 EOTF.

An EOTF is typically considered a decompression function (i.e. it is a concave function, which stretches or brightens the higher brightnesses -as mapped to output luminances- compared to lower brightnesses) while vice versa the EOTF$^{-1}$ (which can be considered an OETF matching the EOTF) is the inverse and hence a considered compression function (i.e. it is convex, gradually reducing slope for higher brightnesses). Thus, it can be considered that the perceptually uniform domain is connected to the EOTF$^{-1}$ in that this function converts linear-light into perceptually uniform data values. This function typically has the (approximated) properties of $\lim_{x \downarrow 0} f(x) = \alpha x^{1/\gamma}$ and $\lim_{x \uparrow \Gamma} f(x) = \beta \log(x)$ and in between moving from gamma to log behavior at increasing x.

Any EOTF that provides a one to one mapping from luma values to linear optical light values inherently also defines the inverse mapping from linear optical light values to luma values, i.e. it has a corresponding OETF. Thus, luma values inherently represent linear optical light values and are thus equivalently encoded according to an EOTF/OETF that defines this mapping.

In contrast to the approach of FIG. 3, the apparatus of FIG. 4 does not proceed to perform brightness adjustment processing on the received luma values. Rather, the apparatus of FIG. 4 comprises a converter 410 which is arranged to convert the perceptually uniform luma codes into luma codes encoded in accordance with an EOTF (and equivalently an OETF given by the inverse EOTF) defined by a logarithmic mapping from optical light values to the second pixel brightnesses. This will also be referred to as a logarithmic EOTF/OETF. The pixel values/ luma codes are accordingly converted into a representation where the luma codes have a logarithmic mapping to optical brightness values. This representation will also be referred to as being in the logarithmic domain. Thus, in this representation, a doubling of the luma code value corresponds to an increase in the optical brightness to which the luma code maps by a factor equal to the base of the logarithm.

Accordingly, the converter 410 provides an Electrical to Electrical Transfer Function, EETF, which maps luma codes encoded according to a perceptually uniform mapping into luma codes encoded according to a logarithmic mapping. The converter accordingly maps first/input pixel brightnesses/ luma codes to second/output pixel brightnesses/ luma codes. The converter 410 seeks to generate the second pixel brightnesses such that they map to the same optical brightnesses as the first pixel brightnesses (i.e. for a pixel the amount of nits represented by the output value is the same as that of the input value) but with the mapping being different (logarithmic rather than perceptually uniform) and thus with the optical brightness (typically) being represented by a different value/luma code.

The converter 410 is coupled to an image processor circuit 411 which is arranged to apply a brightness adjustment processing to the second pixel brightnesses. The brightness adjustment processing may many embodiments specifically be a tone mapping or grading processing and may be one selectively adjusting brightnesses of individual pixels. However, it will be appreciated that in other embodiments other brightness adjustment processing may be performed.

The luma codes/ values resulting from the brightness adjustment processing are output from the image processor circuit 411 and may be further processed or used in any suitable way. For example, in the example of FIG. 4 the resulting pixel values are fed to the mixer 311 where they are used to scale the relative color channel values derived from the input chroma values to provide a color channel RGB output that may be further used, e.g. to display the image. The output from the image processor circuit 411 is preferably PQ.

In other embodiments, the resulting luma codes may be converted back to a perceptually uniform representation/ mapping/ encoding and e.g. transmitted or distributed to remote sources for rendering/ displaying.

The approach may provide a number of advantages including in particular often a substantially reduced complexity and/or resource requirement. Brightness adjustment processing typically involves a scaling of the pixel values. For example, during tone mapping, the brightness values are scaled by a given factor which may be applied to a large number, and sometimes all, pixels of the image. However, the proportional scaling is typically related to the optical linear color representations and determining corresponding values in the perceptually uniform domain is complex and resource demanding as it depends on the absolute value of the brightness and thus differs for different pixels. However, performing such scaling operations in a logarithmic domain may be highly efficient and much less resource demanding. In particular, complex multiplication operations can be replaced by much simpler summation/ subtraction operations (as multiplication converts to addition/ subtraction for logarithmic values).

Thus, using an EETF to convert from the perceptually uniform representation to the logarithmic representation may substantially reduce the computational resource usage, and in general relax the processing requirements, for the brightness adjustment processing. This may be highly advantageous in many applications and scenarios. However, in order to ensure that a sufficiently high quality of the processing is achieved it is critical that the conversion by the EETF is accurate and does not introduce to much distortion. However, this is typically a very difficult challenge to address as the required EETF tends to not be a well behaved function.

As a specific example, the first pixel brightnesses may be represented by perceptually uniform luma codes corresponding to the mapping provided by the ST2084 EOTF. A mapping converting this to a logarithmic mapping can be calculated by the conversion factor required for different luma codes.

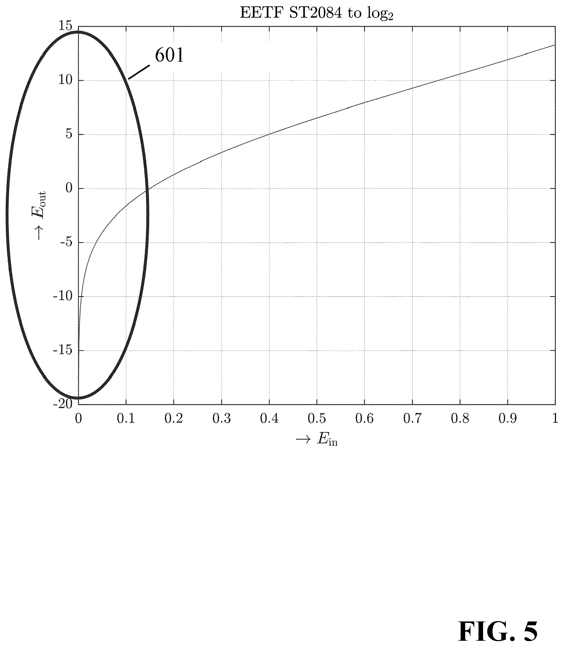

FIG. 5 illustrates an example of such a conversion performing a conversion from an ST2084 EOTF based mapping of luma codes to a $\log_2$ based mapping of luma codes. A particular problem in implementing such a conversion is that for low luma values ($E_{in}$ approaching zero) the required conversion factor approaches $-\infty$. The EETF mapping required for low luma values cannot easily be represented accurately. It is in particular unsuitable for implementing in a Look-Up-Table (LUT) as this would require an exceedingly high number of entries for low luma values.

It should be noted that this issue is not merely related to ST2084 EOTF based mappings for the received luma codes but is in generally the case for most perceptually uniform mappings.

Indeed, most perceptually uniform representations are based on the Barten Lightness and Contrast Sensitivity Function (CSF) functions [see Peter Barten, "Formula for the contrast sensitivity of the human eye," Proc. SPIE 5294, Image Quality and System Performance, (18 December 2003).]. For such mappings the Inverse-EOTF (i.e. the OETF corresponding to the EOTF) behaves like a log-function for high brightness levels and like a Gamma-function for low brightness (dark) levels. Such mappings inherently tend to result in the described issues and the difficulties in converting from perceptually uniform representations to logarithmic representations.

For applying tone-mapping on a ST2084 based video signal like for instance HDR10 or SL-HDR2 the choice can be made to apply a transformation to the linear light domain. Since tone-mapping involves the application of a tone-mapping gain as function of one or more video components or derivatives thereof, like maxRGB, such gain can be very easily implemented in the log domain. A multiplication and division are just an addition or subtraction respectively in the log domain. Another aspect of the log domain is that a considerable lesser number of bits is required than in the linear light domain to achieve the same subjectively perceived picture quality. E.g., in the linear light domain about 28 (= ceil($log_2$($10^4$/EOTF_ST2084($2^{-10}$)))) bits are required to represent the full range of HDR10 whereas in the log domain this is 12-bit (11+s bit). Operating in the log domain can result in a smaller, faster, and hence more efficient realization of the tone-mapping than realizing such operations in a linear light or perceptually uniform domain.

The problem with the EETF EOTF-ST2084-to-log is indicated in FIG. 5. The area 501 indicated reflects a particularly critical region which is difficult to implement by a linear or non-linear LUT, sub-functions, or (a set of) polynomials because of the singularity $\lim_{x \downarrow 0} \text{EETF}(x) = -\infty$.

In the system of FIG. 4, the converter 410 uses a specific approach for converting the luma values/ pixel brightness levels which in many scenarios allow for a low complexity and/or improved conversion. The approach may in many embodiments and scenarios allow an improved and/or facilitated implementation and/or operation. The approach is in particular one that allows a practical implementation of the desired EETF with high accuracy, including for low luma values.

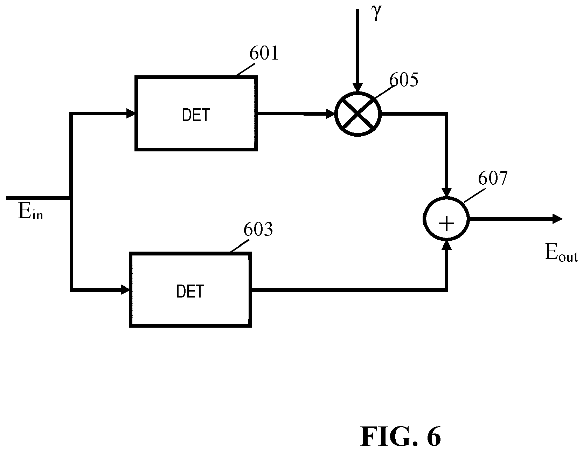

FIG. 6 illustrates elements of an exemplary implementation of the converter. In the approach, the converter 410 does not merely apply a conversion function but rather takes a very specific approach of applying two transforms/ conversions and then combining these into a suitable luma value in the logarithmic domain.

The converter 410 receives luma values representing the pixel brightnesses of the image, also referred to as the first pixel brightnesses. The luma values/codes are referred to as $E_{in}$ and are as described previously provided in a perceptually uniform domain.

The first pixel brightnesses are fed to a first subconverter 601 which is arranged to apply a first logarithm function to the first pixel brightnesses, such as for example a base 2 logarithm. This results in modified values that may be referred to as the first intermediate pixel brightnesses. It will be appreciated that in other embodiments, other bases of logarithms may be used. The first subconverter 601 may further in many embodiments apply a scale factor to the logarithm. The scale factor and/or base of the logarithm may be implementation/ design values that may be optimized for the specific desired performance and operation of the specific embodiment.

The first pixel brightnesses are also fed to a second subconverter 603 which is arranged to generate second intermediate pixel brightnesses from the first pixel brightnesses. The second subconverter 603 may specifically apply a perceptually uniform EOTF to the first pixel brightness and then divide the result by a divisor equal to the first pixel brightness raised to a power with an exponent higher than one. The perceptually uniform EOTF is specifically the EOTF in accordance with which the luma values of the first pixel brightnesses are encoded. Thus, the luma values of the first pixel brightnesses map to a linear light domain optical brightness (e.g. measured in nits) and the perceptually uniform EOTF is the EOTF that maps from the luma value to the optical brightness. The perceptually uniform EOTF used by the second subconverter 603 is thus the inverse transfer function of the perceptually uniform OETF that is used to convert from the captured optical brightnesses to the luma values. The second subconverter 603 is arranged to apply the second logarithm function to the output value from the division.

In particular, the second subconverter 603 may apply the following function to the first pixel brightnesses as represented by the luma codes to generate the second intermediate pixel brightnesses:

$$E_{2ndmod}(E_{in}) = \log_x \left( \frac{\text{EOTF}(E_{in})}{E_{in}^{\gamma}} \right)$$

where $E_{in}$ represents the first pixel brightnesses, EOTF($E_{in}$) represents the output value of the perceptually uniform EOTF; y represents an exponent, and x represents the base of the logarithm.

The first subconverter 601 may apply the following function to the first pixel brightnesses as represented by the luma codes to generate the first intermediate pixel brightnesses:

$$E_{1stmod}(E_{in}) = \log_x(E_{in})$$

where $E_{in}$ represents the first pixel brightnesses; and x represents the base of the logarithm.

The second intermediate pixel brightnesses are in many embodiments scaled by a scale factor equal to the exponent y. In FIG. 6, this is for emphasis illustrated by the separate multiplier 605 but it will be appreciated that this may be considered as a part of the illustrated first subconverter 601.

The first subconverter 601 may thus apply the following function to the first pixel brightnesses as represented by the luma codes to generate the first intermediate pixel brightnesses:

$$E_{1\text{stmod}}(E_{\text{in}}) = \gamma \log_x(E_{\text{in}})$$

where y is the exponent also used by the divisor applied by the second subconverter 603.

The first subconverter 601 (including the multiplier 605) and the second subconverter 603 are coupled to a combiner 607 which is arranged to combine the first intermediate pixel brightnesses and the second intermediate pixel brightnesses. The combiner 607 may specifically be an adder/ summation circuit that adds the first intermediate pixel brightnesses and the second intermediate pixel brightnesses together to generate the second pixel brightnesses.

Overall, the converter 410 may accordingly provide the following EETF applied to the first pixel brightnesses to generate the second pixel brightnesses:

$$E_{\text{out}} = f(E_{\text{in}}) = \log_x\left(\frac{\text{EOTF}(E_{\text{in}})}{E_{\text{in}}^{\gamma}}\right) + \gamma \log_x(E_{\text{in}})$$

The values of x and y are design parameters that may be adapted to the specific preferences and requirements of the individual embodiment. The base of the logarithms is in the described example the same for the first subconverter 601 and the second subconverter 603, but it will be appreciated that in some embodiments, different bases may be used.

In the described example, the first and second brightness values are normalized brightness values with respect to a given optical brightness value. The pixel brightnesses are specifically provided in the range of [0,1] where the upper end of the range (i.e. a luma value of 1) corresponds to a predetermined brightness level. The predetermined brightness level may specifically be a maximum/ peak brightness level representing the highest brightness that can be represented by the luma codes (in other embodiments, luma codes higher than 1 may for example be allowed). For example, in many embodiments, the luma codes may be normalized codes with a value of 1 corresponding to a predetermined brightness level of e.g. 10.000 nits.

In many embodiments, the converter 410 may further be arranged to scale the second pixel brightness by a gain/ scale factor $\alpha$. In some embodiments, the scale factor $\alpha$ may be applied to the combined value, such as at the output of the combiner 607. However, in many embodiments, it may be individually performed in the two paths, i.e. both by the first subconverter 601 and the second subconverter 603. Thus, the converter 410 may for example perform the operation of:

$$E_{\text{out}} = f(E_{\text{in}}) = \alpha \log_x\left(\frac{\text{EOTF}(E_{\text{in}})}{E_{\text{in}}^{\gamma}}\right) + \alpha\gamma \log_x(E_{\text{in}})$$

Such an implementation may be particularly advantageous in many embodiments. In particular, the scaling may efficiently be built into the logarithm function implemented by the first subconverter 601 or can easily be included by modifying the multiplication performed by the multiplier 605. Similarly, the scaling may be included as an integral part of the function implemented by the second subconverter 603. For example, this may be implemented as a Look-Up-Table having stored values that include the scale factor $\alpha$.

The common/ overall scale factor $\alpha$ may in many embodiments be used to scale the output such that it has appropriate relationship between the luma values for the second pixel brightnesses and optical brightness levels. In particular, it may be set such that a maximum value of the first pixel brightnesses, such as in the specific case a value of $E_{\text{in}} = 1$, corresponding to a maximum pixel brightness, such as e.g. 10.000 nits, results in an output value of $E_{\text{out}} = 1$, and with this also corresponding to the maximum pixel brightness, i.e. it also corresponds to e.g. 10.000 nits.

The scale factor $\alpha$ may scale the pixel brightnesses such that maximum input luma values/codes map to the (same) output luma code, and to the same maximum pixel brightness. Specifically, in many embodiments, the scale factor $\alpha$ may be set so that for $E_{\text{in}} = 1$, the converter 410 generates $E_{\text{out}} = 1$.

In some embodiments, the input (first) pixel brightnesses may be in a range that does not include a zero value. For example, for a 12 bit representation, the lowest input brightness may be a value of $2^{-12}$. However, in many embodiments, an input value/ brightness of zero may also be possible and accommodated for. However, this may be treated as a separate/ isolated case for which the output (second) pixel brightness in the logarithmic domain is not determined based on the above approach but rather by a direct separate mapping. For example, an input value of zero may be directly mapped to an output value of zero, and indeed the value of zero may be reserved for zero luminance throughout the different functions, processes, and domains. Indeed, in some embodiments, a zero (luminance) input value may be directly mapped to a zero (luminance) output value (possibly of the entire signal processing chain). Thus, a value may by the described apparatus be treated as a special case that is processed differently from other values. The approach may provide an efficient EETF that may convert from pixel brightnesses and luma codes providing a perceptually uniform representation to pixel brightnesses and luma codes that provide a logarithmic representation. The approach can provide an EETF which accurately converts between the domains and indeed it can be shown that the approach in many cases may provide a theoretically accurate conversion. The approach may thus enable a substantially facilitated luminance adjustment processing where scaling of brightness levels can be performed by lower complexity addition/subtraction operations rather than multiplications.

The use of separate functions that are subsequently combined further allows a more practical and facilitated operation. Indeed, it may in particular mitigate the issue of the required conversion factor being ill behaved for very low luma values and for brightness values approaching complete darkness. Indeed, the approach allows the required transfer function to be separated into a well behaved function (implemented by the second subconverter 603) and a logarithmic function (implemented by the first subconverter 601).

The well behaved function can relatively easily be implemented, e.g. using a LUT with suitable interpolation, or as a combination of a number of part functions each covering a range of luma values and with each part function being an approximation of the well behaved function in a range.

The logarithm function may not be as well behaved in the sense of still having the limit of -∞ for the brightness approaching complete black (luma values approaching zero). However, rather than being a specialized function, the logarithm is a standard mathematical function for which efficient implementations have been developed that provide accurate output values for input values approaching zero. In particular, very efficient hardware (e.g. VLSI or ASIC logic structures) or signal processing algorithms have been developed that specifically address the problem of the logarithmic function approaching -∞.

Thus, the specific approach allows both facilitated implementation and improved accuracy in many scenarios and embodiments.

In many embodiments, the logarithm may be a base 2 logarithm, x=2. This is a particularly advantageous approach as it provides a suitable conversion into a logarithmic representation which can be implemented with suitable/ low complexity. The $\log_x$ may thus preferably be a $\log_2$ because of an implementation advantage in VLSI as well as in computer programs. This advantage is characterized by for instance a fewer tables in an iterative implementation. In VLSI in particular, a number of specific implementations of a $\log_2$ function have been developed which for relatively low complexity provides relatively accurate results.

The first pixel brightnesses may in many embodiments be encoded in accordance with a mapping as defined by the SMPTE, ST 2084 EOTF or the ST 2094-20 EOTF (or equivalently encoded in accordance with the inverse of these EOTFs).

These perceptually uniform domains are widely used, and the current conversion approach provides a particularly efficient way of converting these specific perceptually uniform domains to a logarithmic domain with high accuracy yet allowing a practical and typically low complexity operation.

As previously mentioned, the exponent y is a design parameter that may be carefully adapted to provide the desired results and effects. Particularly advantageous performance many embodiments be achieved for y being below 3, and more advantageously having a value between 1.1 and 4; and often even more advantageously having a value between 1.6 and 1.8. A particularly advantageous performance has been found for y substantially equal to 1.695.

These values allow for an easy/ practical implementation that allows particularly accurate conversion between in particular the specific perceptually uniform mappings represented by ST 2084 EOTF or the ST 2094-20 EOTF. In particular, values between 1.6 and 1.8 may in many cases be particularly suitable for perceptually uniform mappings represented by the ST 2084 EOTF, and values between 2 and 3 (or more advantageously in many embodiments between 2.3 and 2.5) may in many cases be particularly suitable for perceptually uniform mappings represented by the ST 2094-20 EOTF. Indeed, for ST 2094-20, a value of exactly 2.4 may be used, and can be shown to provide advantageous conversion.

Similarly, the overall scale factor α is a design parameter that may be carefully adapted to provide the desired results and effects. For example, it may in many embodiments be adapted to set a relatively scaling between the input first pixel brightnesses and the output second pixel brightnesses for a given reference brightness (e.g. to ensure that the converter 410 generates $E_{out} = 1$ for $E_{in} = 1$).

Particularly advantageous performance may in many embodiments be achieved for α being below 0.5, and more advantageously having a value between a scale factor having a value in the range from 0.05 to 0.1.; and often even more advantageously having a value between 0.07 and 0.08. A particularly advantageous performance has been found for α being substantially equal to 0.075.

In many embodiments, the scale factor may advantageously be determined as:

$$\alpha = \frac{0.25}{\log_2(10)\log_x(2)}$$

The above mentioned values allow for an easy/ practical implementation that allows particularly accurate conversion between in particular the specific perceptually uniform mappings represented by ST 2084 EOTF or the ST 2094-20 EOTF. Indeed, the indicated advantageous values for y and α may advantageously work together to provide a particularly advantageous conversion of the pixel brightnesses resulting in improved overall performance.

In many embodiments, the converter 410 may in many embodiments advantageously provide the function of:

$$E_{\text{out}} = f(E_{\text{in}}) = \alpha \log_x \left( \frac{\text{EOTF}(E_{\text{in}})}{E_{\text{in}}^\gamma} \right) + \alpha\gamma \log_x(E_{\text{in}})$$

Or specifically for an ST 2084 EOTF mapping:

$$E_{\text{out}} = f(E_{\text{in}}) = \alpha \log_x \left( \frac{\text{EOTF\_ST2084}(E_{\text{in}})}{E_{\text{in}}^\gamma} \right) + \alpha\gamma \log_x(E_{\text{in}})$$

where $\gamma > 1$. A $\gamma \approx 1.695$, $\alpha = \dfrac{0.25}{\log_2(10)}$ and $x = 2$.

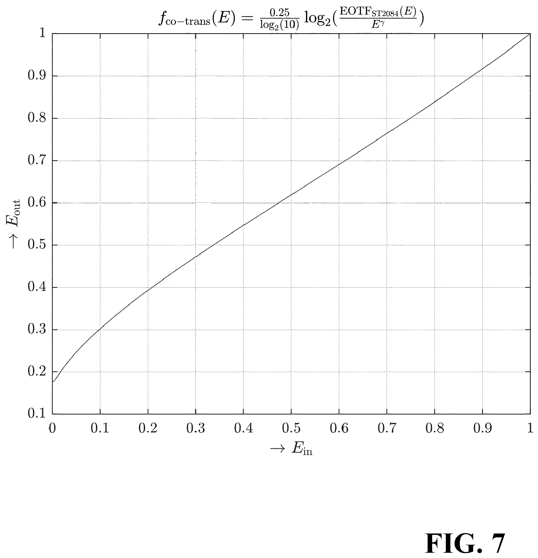

Such an approach has been found to provide near optimal results in terms of conversion accuracy while allowing for a practical and efficient implementation which may use standard known approaches for determining logarithmic values for the second term (implemented by the first subconverter 601) and allowing the first term to be implemented (by the second subconverter 603) using relatively low complexity means, such as by use of a LUT. Indeed, the function of the first term is illustrated in FIG. 7. As can be seen, the function is well behaved and is suited for implementation using a LUT, possibly combined with suitable interpolation. The function may for example also be implemented by a series of subfunctions that each cover a range of input brightness values and which each approximate the function of FIG. 7 in a specific range.

In particular, the function implemented by the second subconverter 603 may lend itself to facilitated implementation as the critical section of the conversion (approaching $-\infty$ for $E_{\text{in}}$ approaching zero) has been excised and is taken care of by the second part/ term by the first subconverter 601. However, as this is a regular log function, efficient realizations (in particular of a $\log_2$ function) have been developed and are known in the field.

The first term includes dividing the EOTF that is the argument of the log function by a Gamma function $E^\gamma$ where $\gamma > 1$. In the case of EOTF ST2084 a $\gamma \approx 1.695$ is near optimal. The choice of $\alpha = \dfrac{0.25}{\log_2(10)}$ in combination with $x = 2$ is, as said, preferable in the case of the ST2084. The reason is that when the Inverse-EOTF of ST2084 would be extrapolated beyond its limit of $10^4$ nit, an almost perfect approximation of this extrapolation would be $E = 0.25 \log_{10}(L)$, where $L \geq 10^4$ in nit. This results in $f(E) = E$ for $E \geq 1$, which is advantageous for some applications when the limit of $E = 1$ is exceeded.

It should also be noted that when the mapping between the perceptual uniform pixel brightness/ luma to linear-light function is in accordance with ST2094-20 at L = 10000 nit, a gamma $\gamma = 2.4$ may result in a substantially perfect and accurate conversion. The function required to be implemented by the second subconverter 603 tends to be much smoother (or more mathematically perfect) for of ST2094-20 than for ST2084

Both the ST2084 and the ST2094-20 EOTFs are derived from the Barten Lightness and CSF functions. The described approach and functions tend to be particularly advantageous to any mapping/ EOTF/ OETF that is derived from the Barten Lightness and CSF and which is desired to be converted to a log domain. A characteristic of the inverse of such EOTFs is for a Gamma behavior towards darkness/ black/ low brightness and a logarithmic behavior towards peak white/ high brightness values.

As mentioned previously, the function implemented by the second subconverter 603 may in many embodiments be implemented as a LUT. The LUT may in some embodiments include a value for each possible luma value indicating a first pixel brightness. In other embodiments, a smaller LUT may be used and interpolation between stored values may be used to determine suitable output values.

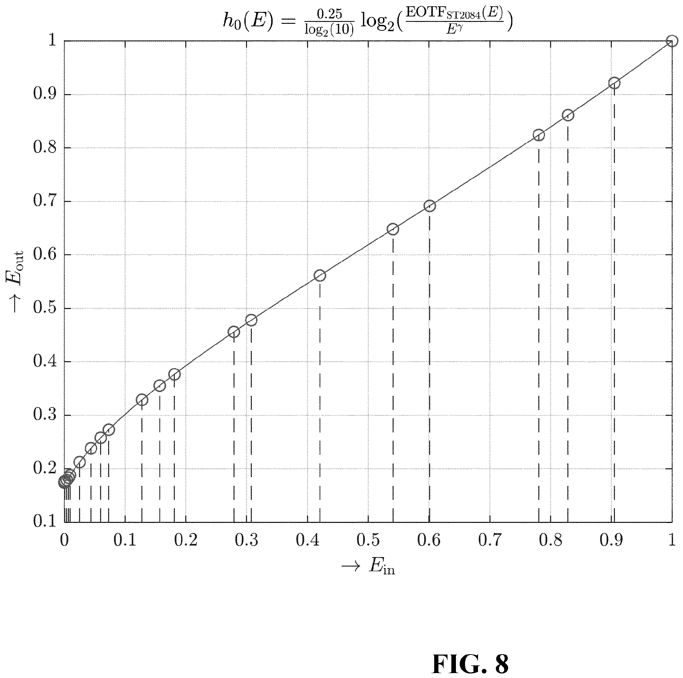

In some embodiments, the input range, i.e. the range of possible values of the first pixel brightnesses, may be divided into a plurality of subranges/ segments. For example, as illustrated in FIG. 8, the function may be divided into 23 subranges/ segments. For each of the individual ranges, a function may be stored which provides a transform mapping from the input pixel brightness to the second intermediate pixel brightness. The functions may specifically be polynomials which have been adapted/ optimized to approximate the optimum function of the second subconverter 603 in the specific segment. Thus, in the example of FIG. 8, one polynomial may be stored for each segment resulting in a total of 23 polynomial functions being stored.

For a given first pixel brightness value, the second subconverter 603 may accordingly determine the subrange/ segment in which the value falls. It may then proceed to select/ retrieve the corresponding polynomial function and evaluate this function for the first pixel brightness value. The result is then used as the second intermediate pixel brightness value.

It will be appreciated that different approaches are known for adapting a polynomial to approximate a given function (for a given range of values) and that any suitable approach may be used. It will also be appreciated that many such embodiments include adapting the ranges for the individual functions. It will also be appreciated that indeed in some scenarios, a fully manual approach may be used to determine suitable functions and ranges.

For example, such approaches may e.g. be based on implementation of a nonuniform segmentation approach for interpolating LUT, such as e.g. described in D.H. Douglas and T.K. Peucker, "Algorithms for the Reduction of the Number of Points Required to Represent a Line or Its Caricature," The Canadian Cartographer, vol. 10, no. 2, pp. 112-122, 1973 or Tsutomu Sasao, Shinobu Nagayama, and Jon T. Butler, "Numerical Function Generators Using LUT Cascades," IEEE Trans. Computers, Vol.56, No.6, Jun 2007.

The apparatus(s) may specifically be implemented in one or more suitably programmed processors. In particular, the artificial neural networks may be implemented in one more such suitably programmed processors. The different functional blocks may be implemented in separate processors and/or may e.g. be implemented in the same processor. An example of a suitable processor is provided in the following.

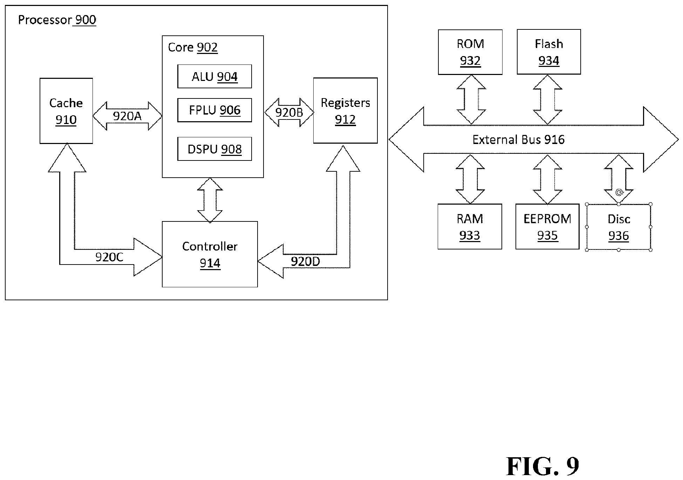

FIG. 9 is a block diagram illustrating an example processor 900 according to embodiments of the disclosure. Processor 900 may be used to implement one or more processors implementing an apparatus as previously described or elements thereof (including in particular one more artificial neural network). Processor 900 may be any suitable processor type including, but not limited to, a microprocessor, a microcontroller, a Digital Signal Processor (DSP), a Field ProGrammable Array (FPGA) where the FPGA has been programmed to form a processor, a Graphical Processing Unit (GPU), an Application Specific Integrated Circuit (ASIC) where the ASIC has been designed to form a processor, or a combination thereof.

The processor 900 may include one or more cores 902. The core 902 may include one or more Arithmetic Logic Units (ALU) 904. In some embodiments, the core 902 may include a Floating Point Logic Unit (FPLU) 906 and/or a Digital Signal Processing Unit (DSPU) 908 in addition to or instead of the ALU 904.

The processor 900 may include one or more registers 912 communicatively coupled to the core 902. The registers 912 may be implemented using dedicated logic gate circuits (e.g., flip-flops) and/or any memory technology. In some embodiments the registers 912 may be implemented using static memory. The register may provide data, instructions and addresses to the core 902.

In some embodiments, processor 900 may include one or more levels of cache memory 910 communicatively coupled to the core 902. The cache memory 910 may provide computer-readable instructions to the core 902 for execution. The cache memory 910 may provide data for processing by the core 902. In some embodiments, the computer-readable instructions may have been provided to the cache memory 910 by a local memory, for example, local memory attached to the external bus 916. The cache memory 910 may be implemented with any suitable cache memory type, for example, Metal-Oxide Semiconductor (MOS) memory such as Static Random Access Memory (SRAM), Dynamic Random Access Memory (DRAM), and/or any other suitable memory technology.

The processor 900 may include a controller 914, which may control input to the processor 900 from other processors and/or components included in a system and/or outputs from the processor 900 to other processors and/or components included in the system. Controller 914 may control the data paths in the ALU 904, FPLU 906 and/or DSPU 908. Controller 914 may be implemented as one or more state machines, data paths and/or dedicated control logic. The gates of controller 914 may be implemented as standalone gates, FPGA, ASIC or any other suitable technology.

The registers 912 and the cache 910 may communicate with controller 914 and core 902 via internal connections 920A, 920B, 920C and 920D. Internal connections may be implemented as a bus, multiplexer, crossbar switch, and/or any other suitable connection technology.

Inputs and outputs for the processor 900 may be provided via a bus 916, which may include one or more conductive lines. The bus 916 may be communicatively coupled to one or more components of processor 900, for example the controller 914, cache 910, and/or register 912. The bus 916 may be coupled to one or more components of the system.

The bus 916 may be coupled to one or more external memories. The external memories may include Read Only Memory (ROM) 932. ROM 932 may be a masked ROM, Electronically Programmable Read Only Memory (EPROM) or any other suitable technology. The external memory may include Random Access Memory (RAM) 933. RAM 933 may be a static RAM, battery backed up static RAM, Dynamic RAM (DRAM) or any other suitable technology. The external memory may include Electrically Erasable Programmable Read Only Memory (EEPROM) 935. The external memory may include Flash memory 934. The External memory may include a magnetic storage device such as disc 936. In some embodiments, the external memories may be included in a system.

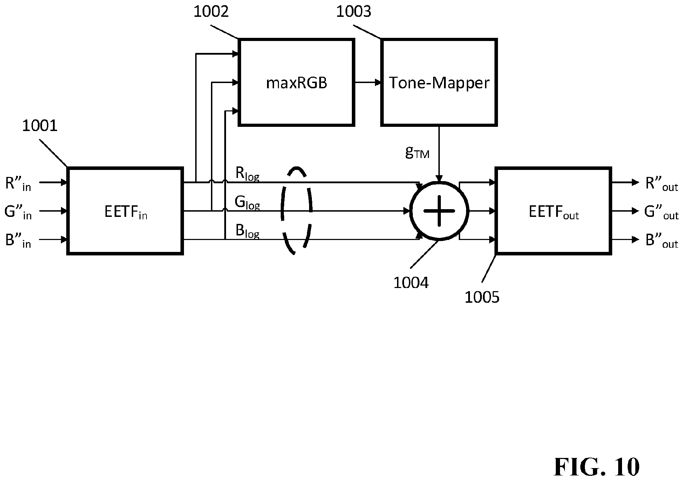

FIG. 10 is a block diagram showing another elucidation embodiment of the disclosure, which is a maxRGB-based tone-mapper for high dynamic range to higher, medium, or lower dynamic range conversion or vice versa. Other brightness measures than luminance can be used. E.g., even when three color components are processed in parallel, when processed similar together, R,G,and B can be about brightness change instead of more general color change. E.g., the maximal one of the three R,G and B color components can be used as a brightness measure. E.g., in a color quadrant predominated by the red color component this red color component would function as the brightness measure (and use the EETF split embodiments on it). RGB component video is in this elucidation embodiment defined in ST2084 domain, and denoted as R"G"B". This pixel color is input of input EETF 1001, which converts the ST2084 video components to the logarithmic domain in accordance with the EETF split principle as described above. The output of EETF 1001 is connected to the input of input component maximum calculator1002, to ensure the maximum color component will function as a brightness (for the brightness processing track), which outputs the highest one of its three inputs $R_{log}$, $G_{log}$, and $B_{log}$. The output of maxRGB 1002 (which value we will call maxRGB) is connected to the input of Tone-Mapper 1003. Tone-Mapper 1003 can do any tone-mapping as desired based on the maxRGB (e.g. typically it applies a tone mapping function on maxRGB as input, e.g. a tone mapping as communicated by the creator or determined by the apparatus itself) and outputs a gain $g_{TM}$. This gain $g_{TM}$ is added by adder 1004 to all video components $R_{log}$, $G_{log}$, and $B_{log}$ in the lower branch. Note that, as said, in the logarithmic domain an addition represents a multiplication in the linear domain. The output of adder 1004 is input to an output EETF 1005, which does the conversion from the logarithmic domain into preferably ST2084 for all video components (i.e. the inverse or substantially the inverse of the input EETF). As such, the output video is a tone-mapped result of the input video both represented in ST2084. Note that this principle can be varied on by e.g. including a further input to the component maximum calculator1002 line a luminance fourth input. The skilled person understands that some variants elucidated with this figure, e.g. the addition instead of multiplication, can also be done in other embodiments, like the one of Fig. 4.The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

**Claims**

1.    An image processing apparatus comprising:

a receiver (401) arranged to receive an image comprising first pixel brightnesses encoded in accordance with a perceptually uniform Electrical to Optical Transfer Function, EOTF;
a converter (410) arranged to convert first pixel brightnesses to second pixel brightnesses encoded in accordance with an EOTF (log EOTF) defined by a logarithmic mapping from optical light values to the second pixel brightnesses;
an image processor circuit (411) arranged to apply a brightness adjustment processing to the second pixel brightnesses;

wherein the converter (410) comprises

a first converter circuit (601, 605) arranged to generate first intermediate pixel brightnesses by applying a first logarithm function to the first pixel brightnesses;

a second converter circuit (603) arranged to generate second intermediate pixel brightnesses by applying a second logarithm function to an output value of the perceptually uniform EOTF for the first pixel brightness divided by a divisor equal to the first pixel brightnesses raised to a power of an exponent having a value exceeding 1;

an adder (607) arranged to obtain the second pixel brightnesses by combining the first intermediate pixel brightnesses and the second intermediate pixel brightnesses.

2. The image processing apparatus of claim 1 wherein the first converter circuit (601, 605) is arranged to apply a scale factor to the logarithm of the first pixel value, the scale factor having a value corresponding to the exponent.

3. The image processing apparatus of claim 1 or 2 wherein the converter (410) is arranged to scale the second pixel brightnesses by a scale factor such that the converter (410) maps a maximum pixel brightness of the first pixel brightnesses to a maximum pixel brightness of the second pixel brightnesses.

4. The image processing apparatus of any previous claim wherein the second converter circuit (603) is arranged to generate the second intermediate pixel brightnesses in response to:

$$E_{2ndmod}(E_{in}) = \log_x \left( \frac{EOTF(E_{in})}{E_{in}{}^\gamma} \right)$$

where $E_{in}$ represents the first pixel brightnesses, $EOTF(E_{in})$ represents the output value of the perceptually uniform EOTF; y represents the exponent, and x represents the base of the logarithm.

5. The image processing apparatus of any previous claim wherein the first converter circuit (601, 605) is arranged to generate the first intermediate pixel brightnesses in response to:

$$E_{1stmod}(E_{in}) = \gamma \log_x (E_{in})$$

where $E_{in}$ represents the first pixel brightnesses; $\gamma$ represents the exponent, and x represents the base of the logarithm.

6. The image processing apparatus of claim 4 or 5 wherein the exponent y has a value between 1.1 and 4.

7. The image processing apparatus of any of the claims 4-6 wherein the converter (410) is arranged to scale the second pixel brightnesses by a scale factor having a value in the range from 0.05 to 0.1.

8. The image processing apparatus of any previous claim wherein the logarithm is a base 2 logarithm.

9. The image processing apparatus of any previous claim wherein the perceptually uniform EOTF is a Society of Motion Picture and Television Engineers, SMPTE, ST 2084 EOTF.

10. The image processing apparatus of any previous claim wherein the perceptually uniform EOTF is a Society of Motion Picture and Television Engineers, SMPTE, ST 2094-20 EOTF.

11. The image processing apparatus of any previous claim wherein the second converter circuit (603) is arranged to:

store at least two functions mapping the first input brightnesses to the second intermediate brightnesses for a subrange of the first input brightnesses, each of the at least two functions being a polynomial function;

select a first function from the at least two functions as one for a range in which a first pixel brightness falls; and

to determine a second intermediate pixel value for the first pixel brightness by applying the first function to the first pixel brightness.

**12.** An image processing method comprising:

receiving an image comprising first pixel brightnesses encoded in accordance with a perceptually uniform Electrical to Optical Transfer Function, EOTF;
converting first pixel brightnesses to second pixel brightnesses encoded in accordance with an EOTF (log EOTF) defined by a logarithmic mapping from optical light values to the second pixel brightnesses;
applying a brightness adjustment processing to the second pixel brightnesses;

wherein the converting comprises

generating first intermediate pixel brightnesses by applying a first logarithm function to the first pixel brightnesses;
generating second intermediate pixel brightnesses by applying a second logarithm function to an output value of the perceptually uniform EOTF for the first pixel brightness divided by a divisor equal to the first pixel brightnesses raised to a power of an exponent having a value exceeding 1;
obtaining the second pixel brightnesses by combining the first intermediate pixel brightnesses and the second intermediate pixel brightnesses.

**13.** The method of claim 12 the second intermediate pixel brightnesses is determined in response to:

$$E_{\text{2ndmod}}(E_{\text{in}}) = \log_x \left( \frac{\text{EOTF}(E_{\text{in}})}{E_{\text{in}}{}^{\gamma}} \right)$$

where $E_{\text{in}}$ represents the first pixel brightnesses, $\text{EOTF}(E_{\text{in}})$ represents the output value of the perceptually uniform EOTF; y represents the exponent, and x represents the base of the logarithm.

**14.** The method of claim 12 or 13 the first intermediate pixel brightnesses is determined in response to:

$$E_{\text{1stmod}}(E_{\text{in}}) = \gamma \log_x (E_{\text{in}})$$

where $E_{\text{in}}$ represents the first pixel brightnesses; y represents the exponent, and x represents the base of the logarithm.

**15.** A computer program product comprising computer program code means adapted to perform all the steps of any of claims 12 to 14 when said program is run on a computer.

**FIG. 1**

221

COLTRF | Im_SDR | HEVCENC

ImSRC

MAST_HDR

F_ct{F_L}

202

203

201

Im_COD
SEI(F_ct)

TXFRMT

204

TXMED

205

208

207

206

ICOLTRF | F_ct | HEVCDEC

Im_RHDR

DA

Im_USDR

RXUFRMT

209

220

Im_DA_MDR

210

**FIG. 2**

**FIG. 3**

FIG. 4

EETF ST2084 to $\log_2$

601

FIG. 5

**FIG. 6**

$$f_{\text{co-trans}}(E) = \frac{0.25}{\log_2(10)} \log_2\left(\frac{\text{EOTF}_{\text{ST2084}}(E)}{E^{\gamma}}\right)$$

**FIG. 7**

$$h_0(E) = \frac{0.25}{\log_2(10)} \log_2\left(\frac{\text{EOTF}_{\text{ST2084}}(E)}{E^\gamma}\right)$$

**FIG. 8**

Processor 900

Core 902

ALU 904

FPLU 906

DSPU 908

Cache 910

920A

920B

Registers 912

Controller 914

920C

920D

ROM 932

Flash 934

External Bus 916

RAM 933

EEPROM 935

Disc 936

FIG. 9

**FIG. 10**

Europäisches
Patentamt

European
Patent Office

Office européen
des brevets

## EUROPEAN SEARCH REPORT

Application Number

EP 22 21 2275

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/035198 A1 (KOUNO KAZUHIKO [JP] ET AL) 30 January 2020 (2020-01-30)<br>* paragraph [0004] – paragraph [0005] *<br>* paragraph [0027] – paragraph [0050] *<br>* paragraph [0083] – paragraph [0103] *<br>----- | 1-15 | INV.<br>G06T5/00<br><br>ADD.<br>H04N1/60<br>G06F5/01<br>H04N5/57<br>H04N9/68 |

TECHNICAL FIELDS
SEARCHED        (IPC)

G06T
H04N
G06F

The present search report has been drawn up for all claims

| Place of search | Date of completion of the search | Examiner |
|---|---|---|
| Munich | 23 May 2023 | Gitzenis, Savvas |

EPO FORM 1503 03.82 (P04C01)

## ANNEX TO THE EUROPEAN SEARCH REPORT
## ON EUROPEAN PATENT APPLICATION NO.

EP 22 21 2275

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2023

| Patent document cited in search report | | Publication date | Patent family member(s) | | Publication date |
|---|---|---|---|---|---|
| US 2020035198 | A1 | 30-01-2020 | EP | 3522514 A1 | 07-08-2019 |
| | | | JP | 6872693 B2 | 19-05-2021 |
| | | | JP | WO2018062022 A1 | 29-08-2019 |
| | | | US | 2020035198 A1 | 30-01-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017157977 A

- WO 2016091406 A

**Non-patent literature cited in the description**

- **PETER BARTEN.** Formula for the contrast sensitivity of the human eye. *Proc. SPIE 5294, Image Quality and System Performance,* 18 December 2003
- **D.H. DOUGLAS ; T.K. PEUCKER.** Algorithms for the Reduction of the Number of Points Required to Represent a Line or Its Caricature. *The Canadian Cartographer,* 1973, vol. 10 (2), 112-122

- **TSUTOMU SASAO ; SHINOBU NAGAYAMA ; JON T. BUTLER.** Numerical Function Generators Using LUT Cascades. *IEEE Trans. Computers,* June 2007, vol. 56 (6